# EUROPÄISCHE PATENTSCHRIFT

(11) **EP 2 198 991 B1**
(45) Veröffentlichungstag und Bekanntmachung des Hinweises auf die Patenterteilung: **03.08.2011**
(21) Anmeldenummer: 08022326.6
(22) Anmeldetag: 22.12.2008
(51) Int. Cl.: B21D 37/14, B21D 28/36, B23Q 3/155, B21D 5/02

(54) **Blechbelade- und Blechentladeeinheit mit einer Werkzeugaufnahme für Blechbearbeitungsmaschinen**
Sheet metal loading and unloading unit with a tool holder for sheet metal processing machines
Unité de chargement et de déchargement de tôles dotée d'une réception d'outil pour machines de traitement de tôle

(43) Veröffentlichungstag der Anmeldung: 23.06.2010
(73) Patentinhaber: TRUMPF Werkzeugmaschinen GmbH + Co. KG, 71254 Ditzingen (DE)
(72) Erfinder: Büttner, Stefan, 71706 Markgröningen (DE); Kerscher, Stefan, 75045 Walzbachtal (DE); Klinkhammer, Marc, 71254 Ditzingen (DE)
(74) Vertreter: Prüfer & Partner GbR European Patent Attorneys

(56) Entgegenhaltungen:
- EP-A- 0 455 164
- EP-A- 0 472 200
- EP-A- 0 893 173
- EP-A- 1 733 840
- CH-A5- 668 035
- US-A- 5 451 195
- US-A- 5 882 285

## Beschreibung

Die Erfindung betrifft eine Blechbelade- und Blechentladeeinheit mit einer Werkzeugaufnahme für Blechbearbeitungsmaschinen.

Ein Typ von Blechbearbeitungsmaschinen, nämlich Stanzmaschinen weist im Allgemeinen ein integriertes Magazin zur Aufbewahrung von Stanzwerkzeugen auf, die zum Abarbeiten von bestimmten Bearbeitungsschritten bei der Herstellung von Blechteilen vorgesehen sind. Beim Auftreten von vielen verschiedenen Arbeitsschritten, wie z.B. Stanzvorgängen mit verschiedenen Formen, Nibbeln, Gewindeformen und Umformen, wie sie bei der Komplettbearbeitung von Fertigungsteilen auftreten, ist eine größere Anzahl verschiedener Werkzeuge erforderlich. Aus diesem Grund ist die Aufnahmekapazität von Werkzeugmagazinen, die in die Stanzmaschinen integriert sind, oft nicht ausreichend.

Es gibt verschiedene Möglichkeiten, eine größere Anzahl von Werkzeugen einzusetzen, als die, die in den integrierten Werkzeugmagazinen aufgenommen werden können.

Zum einen können Werkzeuge während Bearbeitungspausen manuell in das Werkzeugmagazin eingewechselt werden, was aber immer wieder einen Bearbeitungsstillstand und einen manuellen Aufwand bedeutet, und somit unwirtschaftlich ist.

Eine weitere Alternative ist die Bereitstellung eines zusätzlichen separaten Werkzeugmagazins, in dem Stanzwerkzeuge aufbewahrt werden, um automatisiert in das Werkzeugmagazin, das in die Stanzmaschine integriert ist, eingewechselt werden zu können, und von dort zur Bearbeitung in die Werkzeugaufnahmen aufgenommen werden. Verschiedene Beispiele dieser Stanzvorrichtungen sind aus EPO 455 164 A und US 5 882 285 bekannt. Dies erfordert aber eine zusätzliche Maschinenkomponente, was mit einem entsprechenden Kostenaufwand und erhöhten Platzbedarf verbunden ist. Durch die große Anzahl von verschiedenen Bearbeitungsschritten ist auch bei Verwendung eines standardmäßigen separaten Werkzeugmagazins die mögliche Anzahl der zu bevorratenden Werkzeuge oft nicht mehr ausreichend, um eine wirtschaftliche Fertigung zu gewährleisten, so dass eine zusätzliche Bereitstellungskapazität erforderlich ist.

Auch bei einem anderen Typ von Blechbearbeitungsmaschinen, nämlich Biegemaschinen ist ein automatischer Wechsel der Werkzeuge möglich. Die Biegewerkzeuge werden ebenfalls in einem Werkzeugmagazin an der Biegemaschine bevorratet und automatisch in eine Biegestation gebracht. Durch die oft großen Abmessungen der Biegewerkzeuge ist das Vorhalten der erforderlichen Anzahl von Biegewerkzeugen in oder an der Maschine jedoch noch aufwendiger als bei Stanzwerkzeugen.

Weitere Typen von Blechbearbeitungsmaschinen, bei denen ein automatischer Werkzeugwechsel grundsätzlich möglich ist, sind Kombinationsmaschinen, wie z.B. Stanz-/Biegemaschinen oder Stanz-/Lasermaschinen.

Es ist die Aufgabe der vorliegenden Erfindung, ein Handhabungssystem, das automatisiert, ohne einen zusätzlichen Platzaufwand und größeren Investitionsaufwand zu erfordern, Werkzeuge in eine Blechbearbeitungsmaschine einwechselt und aus der Blechbearbeitungsmaschine auswechselt, und ein Verfahren zum Ein- und Auswechseln der Werkzeuge zur Verfügung zu stellen.

Die Aufgabe wird durch eine Blechbelade- und Blechentladeeinheit gemäß Anspruch 1, einer Blechbearbeitungsmaschine gem. Anspruch 7, und ein Verfahren gemäß einem der Ansprüche 11 oder 12 gelöst. Weiterentwicklungen der Erfindung sind in den jeweiligen abhängigen Ansprüchen beschrieben.

Die beanspruchten Gegenstände und Verfahren bieten die Möglichkeit, gleiche Baugruppen zur Erledigung von verschiedenen Aufgaben zu nutzen, und hier eine Blechaufnahmeeinheit einer Blechbelade- und Blechentladeeinheit als Werkzeughandhabungssystem zu nutzen.

Die Erfindung wird unter Bezugnahme auf die beigefügten Zeichnungen erklärt.
- Fig. 1: zeigt eine seitliche Ansicht einer Blechbelade- und Blechentladeeinheit mit einem Werkzeugmagazin für Stanz- und Umformwerkzeuge, und einer Blechaufnahmeeinheit mit einer Werkzeugaufnahme;
- Fig. 1a: zeigt eine vergrößerte Draufsicht auf einen drehbaren Halter mit zwei ersten Werkzeugaufnahmen;
- Fig. 1b: ist eine prinzipielle Darstellung eines Werkzeugmagazins für Biegewerkzeuge, und einer Blechaufnahmeeinheit mit einer Werkzeugaufnahme für Biegewerkzeuge;
- Fig. 2: ist eine perspektivische Darstellung einer Stanzma- schine;
- Fig. 3: ist eine perspektivische Darstellung einer Biegemaschine;
- Fig. 4a bis 4c: zeigen den Ablauf eines Werkzeugwechsels bei einer Biegemaschine.

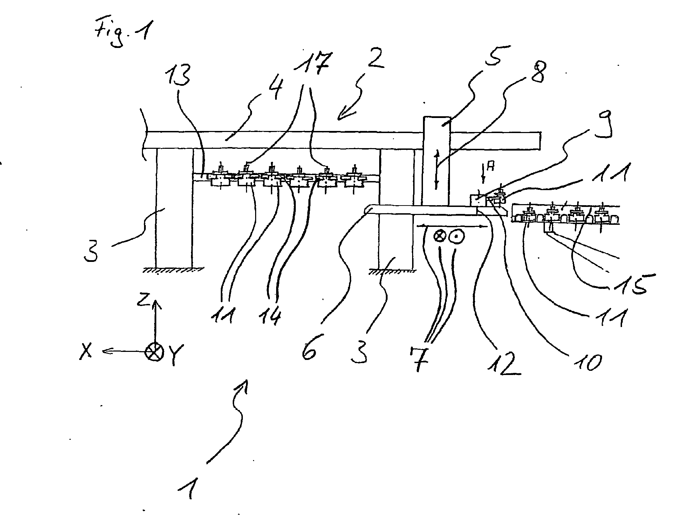

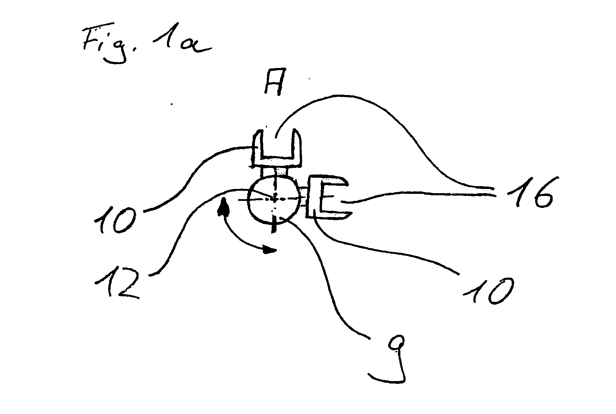

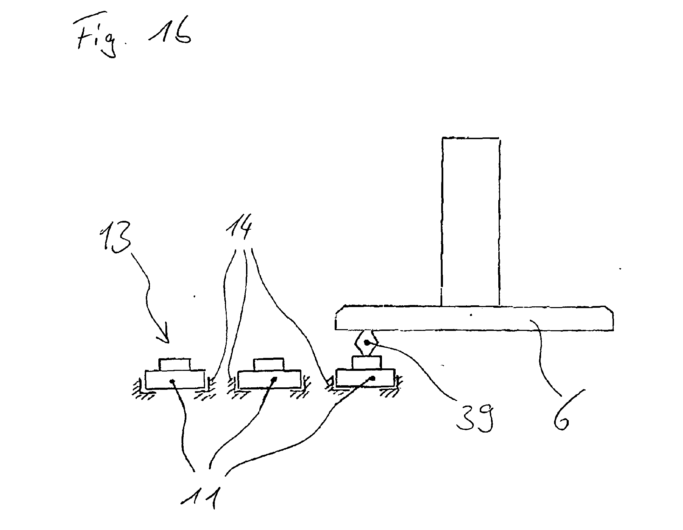

Fig. 1 ist eine seitliche Ansicht einer Blechbelade- und Blechentladeeinheit 1. Die Blechbelade- und Blechentladeeinheit 1 weist eine stationäre Einheit 2 auf. Für die stationäre Einheit 2 ist ein Rahmen mit zwei vertikalen Ständern 3 und eine horizontale Lineareinheit 4 vorgesehen. Am beweglichen Element der horizontalen Lineareinheit 4 ist eine vertikale Lineareinheit 5 vorgesehen, die in einer vertikalen Richtung beweglich ist. Am unteren Ende weist die vertikale Lineareinheit 5 eine Blechaufnahmeeinheit 6 auf. Die Blechaufnahmeeinheit 6 ist auf ihrer Unterseite mit nicht gezeigten Einrichtungen zum Aufnehmen von Blechen, mit Greifern, Saugern oder Magneten zum Aufnehmen von später gezeigten Blechtafeln versehen.

In der vertikalen Lineareinheit 5 sind jeweils ein Antrieb 7 für eine Bewegung der vertikalen Lineareinheit 5 mit der Blechaufnahmeeinheit 6 in einer ersten horizontaler Richtung entlang der horizontalen Lineareinheit 5 (X-Richtung) und für eine Bewegung in einer zweiten horizontalen Richtung (Y-Richtung), und ein Antrieb 8 für eine Bewegung der Blechaufnahmeeinheit 6 in vertikaler Richtung vorgesehen.

Alternativ kann auch ein einziger Antrieb vorgesehen sein.

Auf der Oberseite der Blechaufnahmeeinheit 6 ist ein in Fig. 1a gezeigter drehbarer Halter 9 vorgesehen. Der drehbare Halter 9 weist zwei erste Werkzeugaufnahmen 10 zum Aufnehmen von Blechbearbeitungswerkzeugen 11, hier Stanzwerkzeugen, auf. Der Halter 9 ist um eine vertikale Achse 12 drehbar gelagert. In Richtung der Achse 12 gesehen sind die Werkzeugaufnahmen 10 in einem bestimmten Winkel fest zueinander positioniert angeordnet. Der Winkel beträgt hier 90°, kann aber auch andere Werte, z.B. 180° annehmen.

In alternativen Ausführungsformen kann nur eine Werkzeugaufnahme 10, oder können mehrere Werkzeugaufnahmen 10 in X-Richtung nebeneinander fest an der Blechaufnahmeeinheit 6 vorgesehen sein. Weiterhin ist es in anderen Ausführungsformen auch möglich, dass mehr als zwei Werkzeugaufnahmen 10 vorgesehen sind, die dann revolverartig um die Achse 12 angeordnet sind. Zusätzlich zu einer Drehbewegung um die Achse 12 ist auch eine translatorische Bewegung des drehbaren Halters 9 in Y-Richtung, und/oder eine translatorische Bewegung der ersten Werkzeugaufnahmen 10 an dem Halter 9 radial zur Achse 12 in besonderen Ausführungsformen möglich. Auch die nebeneinander an der Blechaufnahmeeinheit 6 vorgesehenen Werkzeugaufnahmen 10 können in bestimmten Ausführungsformen eine translatorische Bewegung in Y-Richtung ausführen.

Die Öffnungs- und Schließbewegungen der ersten Werkzeugaufnahmen 10 werden pneumatisch angetrieben. Die Drehbewegung des drehbaren Halters 9 erfolgt ebenfalls durch einen nicht gezeigten pneumatischen Drehantrieb. Alternativ kann auch, insbesondere bei mehr als zwei ersten Werkzeugaufnahmen 10 an dem drehbaren Halter 9, der Antrieb durch einen elektrischen Antrieb, z.B. einem Schrittmotor ausgeführt werden.

Um das zusätzliche Gewicht, das aufgrund der mitbewegten Werkzeugaufnahmen 10, die auf der Blechaufnahmeeinheit 6 aufgenommen sind, nicht immer zu transportieren, ist in einer weiteren alternativen Ausführungsform eine Schnittstelle vorgesehen. Diese Schnittstelle kann die Verbindungsstelle zwischen der Blechaufnahmeeinheit 6 und einer der Werkzeugaufnahmen 10 oder dem drehbaren Halter 9, an dem dann wiederum Werkzeugaufnahmen 10 angeordnet sind, sein. Es können auch mehrere Schnittstellen vorgesehen sein. Die Schnittstellen können auch translatorisch in Y-Richtung bewegbar sein, oder eine translatorische Bewegung kann durch eine Werkzeugaufnahme, die an der Schnittstelle oder dem drehbaren Halter befestigt wird, mit einer Einrichtung zur translatorischen Bewegung ausgeführt werden.

Die Befestigung des drehbaren Halters oder der Werkzeugaufnahme an Schnittstelle wird über eine magnetische Kraft, eine formschlüssige Aufnahme, oder sonstige Wirkungsweisen ermöglicht.

Zwischen den beiden vertikalen Ständern 3 ist hier ein erstes Werkzeugmagazin 13 für Stanzwerkzeuge vorgesehen. In diesem Werkzeugmagazin 13 ist eine Mehrzahl, hier sechs, von zweiten Werkzeugaufnahmen 14 für Stanzwerkzeuge vorgesehen, die horizontal in X-Richtung nebeneinander angeordnet sind. In diesen zweiten Werkzeugaufnahmen 14 ist hier jeweils eines der Stanzwerkzeuge 11 aufgenommen.

Um mehrere zweite Werkzeugaufnahmen 14 vorzusehen, können in einer alternativen Ausführung des Werkzeugmagazins 13 die zweiten Werkzeugaufnahmen 14 auch in mehreren horizontalen Ebenen angeordnet sein. Eine andere Möglichkeit ist die Anordnung der Werkzeugaufnahmen 14 in einer horizontalen Ebene, so dass die Werkzeugaufnahmen 14 in Richtung der Y-Achse hintereinander angeordnet sind. Auch eine Anordnung der Werkzeugaufnahmen 14 nebeneinander in X- und Y-Richtung ist ein einer weiteren Ausführungsform möglich.

Bei der Anwendung für Biegemaschinen sind für die Biegewerkzeuge geeignete zweite Werkzeugaufnahmen vorgesehen, die ebenfalls zwischen den beiden Ständern angeordnet sind.

In einer weiteren alternativen Ausführungsform ist das erste Werkzeugmagazin 13 für Stanzwerkzeuge oder das Magazin für die Biegewerkzeuge nicht in die stationäre Einheit 2 integriert, sondern eine separate Maschinenkomponente, die im Aktionsbereich der Blechaufnahmeeinheit 6 angeordnet ist.

Weiterhin ist auch die alternative Ausführung möglich, dass das erste Werkzeugmagazin 13 auf der Blechaufnahmeeinheit 6 vorgesehen ist.

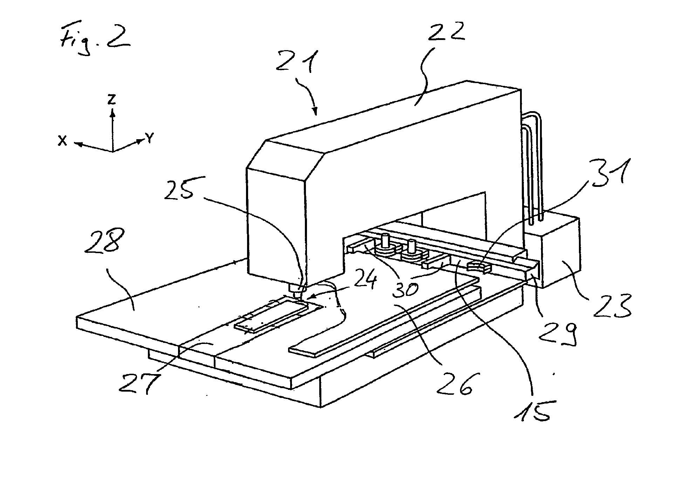

In Fig. 1 ist außerdem ein zweites Werkzeugmagazin 15 gezeigt, das zu Fig. 2 näher beschrieben wird.

Fig. 1b zeigt eine prinzipielle Darstellung einer Blechaufnahmeeinheit 6 mit nur einer auf der Unterseite angeordnet dargestellten vierten Werkzeugaufnahme 39, hier einem Sauger. Weiterhin ist das erste Werkzeugmagazin 13 mit den zweiten Werkzeugaufnahmen 14, und Biegewerkzeuge 11 gezeigt. In alternativen Ausführungsformen sind mehrere vierte Werkzeugaufnahmen 39, wie Sauger, oder alternativ Greifer oder Magnete vorgesehen. Diese können sowohl zum Aufnehmen von Blechtafeln, als auch zu Aufnehmen von geeignet gestalteten Werkzeugen verwendet werden. Für die Verwendung der Sauger oder Magnete als Werkzeugaufnahme ist eine Gestalt der Werkzeuge günstig, die zumindest einen größeren flächigen Abschnitt aufweist. Dies ist insbesondere bei Biegewerkzeugen 11 der Fall.

In Fig. 2 ist eine Ausführungsform einer Blechbearbeitungsmaschine, eine Stanzmaschine 21, die in Verbindung mit der Blechbelade- und Blechentladeeinheit 1 verwendet wird, dargestellt. Ein wesentlicher Bestandteil der Stanzmaschine 21 ist ein C-Rahmen 22. Der C-Rahmen 22 besteht aus einer torsionssteifen Schweißkonstruktion aus Stahl.

Am hinteren Ende des C-Rahmens 22 ist ein Hydraulikaggregat 23 vorgesehen, mit dem ein Stößel 25 über einen nicht gezeigten Stößelantrieb hydraulisch angetrieben wird.

Auf der unteren Innenseite des C-Rahmens 22 ist eine untere Werkzeugaufnahme 24 zum Aufnehmen eines Werkzeugunterteils des Stanzwerkzeugs 11 vorgesehen. Das Werkzeugunterteil ist über einen Drehantrieb um 360° drehbar und in jeder beliebigen Winkellage feststellbar.

Auf der oberen Innenseite des C-Rahmens 22 ist der Stößel 25 vorgesehen. Der Stößel 25 mit einer oberen Werkzeugaufnahme nimmt ein Werkzeugoberteil des Stanzwerkzeugs 11 formschlüssig und spielfrei auf. Der Stößel 25 ist ebenfalls um 360° drehbar und kann in jeder beliebigen Winkellage festgestellt werden. Dafür ist ein zweiter Drehantrieb vorhanden.

Die Drehantriebe, sowie die Antriebsvorrichtung 7, 8 der Blechbelade- und Blechentladeeinheit 1 werden von einer nicht gezeigten Maschinensteuerungsvorrichtung gesteuert, die in einem separaten Schaltschrank vorgesehen ist. Weiterhin wird auch eine Stößelsteuerung, sowie sämtliche Linearantriebe zur Bewegung einer Blechplatte 26 und Aktuatoren für Sonderfunktionen, beispielsweise das Ab- und Hochklappen einer Teileklappe 27, durch die Maschinensteuerungsvorrichtung gesteuert. Die Steuerungsvorrichtung weist als Ein- und Ausgabemittel eine Tastatur und einen Monitor auf. Die Steuerungsfunktionen werden von Mikrocontrollern ausgeführt. Bearbeitungsprogramme und Betriebsparameter sind in einem Speicherbereich der Steuerungsvorrichtung abgespeichert.

Auf der unteren Innenseite des C-Rahmens 22 ist ein Maschinentisch 28 angeordnet, der eine Querschiene 29 mit einem Linearmagazin, dem zweiten Werkzeugmagazin 15 aufweist. An der Querschiene 29 sind Spannpratzen 30 zum Festhalten der Blechplatte 26 angeordnet. Die Spannpratzen 30 können an geeigneten Stellen auf der Querschiene 29 befestigt werden, und können so versetzt werden, dass das Blech 26 sicher gehalten wird, aber das Blech 26 nicht an einer zu bearbeitenden Fläche gegriffen wird. In dem Linearmagazin 15 sind mehrere, hier drei, dritte Werkzeugaufnahmen 31 für mehrere, hier zwei, Stanzwerkzeuge 11 vorhanden. Vorderhalb der unteren Werkzeugaufnahme 24 ist die Teileklappe 27 zum Ausschleusen von kleineren Blechteilen zentral angeordnet.

Im Betrieb fährt der Maschinentisch 28 zum Stanzen in einer Y-Richtung gemeinsam mit der Querschiene 29, an der die Spannpratzen 30 befestigt sind, mit denen das Blech 26 gehalten wird, in eine programmierte Position, und die Querschiene 29 fährt in X-Richtung in die programmierte Position, wobei das Blech 26 über den Maschinentisch 28 gleitet. Dann wird von dem Stößel 25 ein Stanzhub durchgeführt. Im Anschluss daran wird mit demselben Prinzip die nächste Stanzposition angefahren.

Die Stanzwerkzeuge 11 werden automatisch, durch die Maschinensteuerungsvorrichtung angesteuert, gewechselt. Dazu fährt zum Wechseln der Werkzeuge 11 aus dem zweiten Werkzeugmagazin 15 die Querschiene 29, angetrieben von einem nicht gezeigten Linearantrieb, in eine Position in einer X-Richtung, so dass die X-Position des einzuwechselnden Werkzeugs 11 der X-Position der unteren Werkzeugaufnahme 24 entspricht. Die Querschiene 29 fährt dann gemeinsam mit dem Maschinentisch 28, von einem weiteren Linearantrieb angetrieben, in eine Position in der Y-Richtung, in der eine Achse des Stanzwerkzeugs 11 mit einer Mittelachse der unteren Werkzeugaufnahme 24 und dem Stößel 25 übereinstimmt, so dass das Stanzwerkzeug 11 in die untere Werkzeugaufnahme 24 und in den Stößel 25 aufgenommen werden kann. Sofern in dem Stößel 25 und der unteren Werkzeugaufnahme 24 ein Werkzeug vorhanden ist, wird dieses vorher an einen freien Platz im Linearmagazin 15 abgegeben.

Zum Wechseln des Werkzeugs 11 aus dem ersten Werkzeugmagazin 13 in Fig. 1 in die obere und untere Werkzeugaufnahme 24, 25 wird zunächst das erforderliche Stanzwerkzeug 11 aus dem ersten Werkzeugmagazin 13 entnommen. Hierzu verfährt die Blechaufnahmeeinheit 6 in X-Richtung so, dass in Fig. 1 die Achse 12 des drehbaren Halters 9 in X-Richtung mit einer Mittelachse 17 des gewünschten Stanzwerkzeugs 11 übereinstimmt. Anschließend verfährt die Blechaufnahmeeinheit 6 in Y-Richtung bezüglich der Zeichnungsebene so weit nach hinten, dass die erste Werkzeugaufnahme 10 das Stanzwerkzeug 11 greifen kann, d.h. eine Öffnung 16 der ersten Werkzeugaufnahme 10 das Stanzwerkzeug 11 formschlüssig greifen kann. Dann wird eine Schließbewegung der ersten Werkzeugaufnahme 10 ausgeführt und das Stanzwerkzeug durch eine Bewegung der Blechaufnahmeeinheit 6 in der entgegengesetzten Y-Richtung nach vorne aus der zweiten Werkzeugaufnahme 14 des ersten Werkzeugmagazins 13 entnommen. Die Blechaufnahmeeinheit 6 verfährt dann in X-Richtung so weit in Richtung der Stanzmaschine 21, bis die Mittelachse 17 des Stanzwerkzeugs mit der Mittelachse der oberen und unteren Werkzeugaufnahme 24, 25 übereinstimmt, und anschließend verfährt die Blechaufnahmeeinheit 6 analog in der Y-Richtung. Danach wird das Stanzwerkzeug 11 in herkömmlicher Weise in die Werkzeugaufnahmen 24, 25 übernommen. Hierzu ist es erforderlich, dass ein freier Raum vor der unteren Werkzeugaufnahme 25 geschaffen wird, da die Ein- und Auswechselbewegung horizontal ist. Zur Schaffung des Freiraums vor der unteren Werkzeugaufnahme wird die Teileklappe 27 vertikal nach unten verfahren. Ein Abklappen alleine ist nicht ausreichend, da in diesem Fall die Schwenkachse der Teileklappe 27 unverändert im Kollisionsbereich mit dem einzuwechselnden Werkzeug bleibt.

Alternativ zu der Bewegung der Blechaufnahmeeinheit 6 in Y-Richtung kann in einer alternativen Ausführung nur die erste Werkzeugaufnahme 10 oder der drehbare Halter 9 selbst in Y-Richtung verfahren werden.

Die Bewegung der ersten Werkzeugaufnahme 10 erfolgt hier in Y-Richtung, ist aber grundsätzlich so zu wählen, dass eine Bewegung relativ zu der zweiten Werkzeugaufnahme 14 erfolgt, so dass das Stanzwerkzeug 11 aus der Werkzeugaufnahme 14 entnommen, oder an sie abgegeben werden kann.

Neben den jeweils beschriebenen Verfahren zum Ein- und Auswechseln des Stanzwerkzeugs 11 in die Werkzeugaufnahmen 24, 25 und aus den Werkzeugaufnahmen 24, 25 aus dem ersten Werkzeugmagazin 13 und dem zweiten Werkzeugmagazin 15 sind noch weitere Verfahren zum Auswechseln von Stanzwerkzeugen 11 möglich.

Das in das zweite Werkzeugmagazin 15 einzuwechselnde Stanzwerkzeug 11 wird durch eine der ersten Werkzeugaufnahmen 10 aus dem ersten Werkzeugmagazin 13 in bekannter Weise entnommen und dann in der selben Weise wie die Übergabe an die obere und untere Werkzeugaufnahme 24, 25 ausgeführt wird, an eine bestimmte dritte Werkzeugaufnahme 31 in dem zweiten Werkzeugmagazin 15 übergeben. Bei einem Vorhandensein eines Stanzwerkzeugs 11 in dieser dritten Werkzeugaufnahme 31, in die das Stanzwerkzeug 11 aus der ersten Werkzeugaufnahme 10 übergeben werden soll, wird der drehbare Halter 9 hier um 90° so gedreht, oder die Blechaufnahmeeinheit 6 in X-Richtung so verfahren, dass die zweite der ersten Werkzeugaufnahmen 10 so positioniert ist, dass das in dieser dritten Werkzeugaufnahme 31 vorhandene Stanzwerkzeug 11 damit entnommen werden kann. Anschließend wird der drehbare Halter 9 wieder in die entgegengesetzte Richtung hier um 90° gedreht oder die Blechaufnahmeeinheit 6 in die entgegengesetzte X-Richtung verfahren, und das einzuwechselnde Stanzwerkzeug 11 an diese dritte Werkzeugaufnahme 31 übergeben. Das aus dem zweiten Werkzeugmagazin 15 entnommene Stanzwerkzeug 11 kann dann entweder in das erste Werkzeugmagazin 13 übergeben werden oder in die obere und untere Werkzeugaufnahme 24, 25 eingesetzt werden.

In gleicher Weise können auch die Stanzwerkzeuge 11 von dem zweiten Werkzeugmagazin 15 in das erste Werkzeugmagazin 13 übergeben werden.

In einer alternativen Ausführung, in der zwei oder mehrere der ersten Werkzeugaufnahmen 10 nebeneinander auf der Blechaufnahmeeinheit 6 angeordnet sind, besteht die Möglichkeit gleichzeitig mehrere der Stanzwerkzeuge 11 von dem ersten Werkzeugmagazin 13 in das zweite Werkzeugmagazin 15 und umgekehrt zu übergeben.

Weiterhin können, in Abhängigkeit der Anzahl der nebeneinander auf der Blechaufnahmeeinheit 6 angeordneten, oder an dem drehbaren Halter vorhandenen ersten Werkzeugaufnahmen 10, mehrere der Stanzwerkzeuge 11 innerhalb des ersten oder zweiten Werkzeugmagazins umsortiert werden, d.h. in eine andere Werkzeugaufnahme übergeben werden.

Das Verfahren zum Einwechseln der Stanzwerkzeuge aus dem ersten Werkzeugmagazin 13 kann durch das Beladen der Stanzmaschine 21 mit einer Blechtafel 26 überlagert sein. Hierbei werden erst die erforderlichen Stanzwerkzeuge 11 aus dem ersten Werkzeugmagazin 13 entnommen, dann die Blechtafel 26 über entsprechende Greifer oder Sauger aus einem Magazin im Bereich der stationären Einheit 2 entnommen und die entnommenen Stanzwerkzeuge 11 gemeinsam mit der Blechtafel 26 zu der Stanzmaschine 21 gefahren. Dort werden die Stanzwerkzeuge 11 entweder an das zweite Werkzeugmagazin 15 oder die obere und untere Werkzeugaufnahme 24, 25 übergeben. Die Blechtafel 26 wird auf dem Maschinentisch 28 abgelegt, und an die Spannpratzen 30 übergeben. Das Entladen von gefertigten Blechteilen kann ebenfalls mit dem Auswechseln von Stanzwerkzeugen 11 in das erste Werkzeugmagazin 13 überlagert sein.

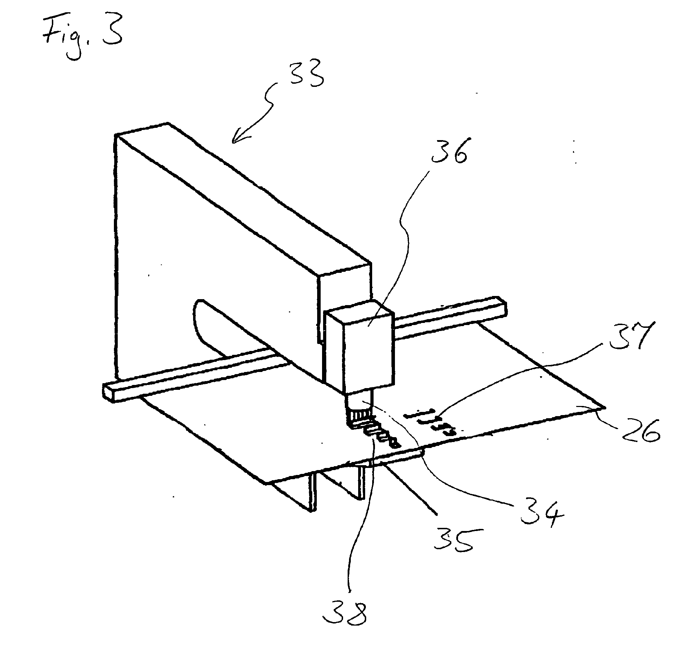

Fig. 3 zeigt in einer prinzipiellen Darstellung eine Biegemaschine 33. Der grundsätzliche Aufbau der Biegemaschine 33 ist vergleichbar mit der zu Fig. 2 beschriebenen Stanzmaschine 21. Die Biegemaschine 33 weist u.a. eine obere Werkzeugaufnahme 34 mit einem Antrieb 36 und eine untere Werkzeugaufnahme 35, sowie eine nicht gezeigte Steuerungsvorrichtung auf. Einige Maschinenkomponenten, z.B. die Werkzeugaufnahmen 34, 35 und die Antriebseinrichtung 36 sind für den Biegeprozess mit Biegewerkzeugen optimiert. In Fig. 3 ist gezeigt, wie das Blech 26 hier mit Ausstanzungen 37 versehen ist, die dann zu nach oben gebogenen Blechabschnitten 38 umgeformt werden.

Das Ein- und Auswechseln von weiteren Blechbearbeitungswerkzeugen 11, hier Biegewerkzeugen, aus dem ersten Werkzeugmagazin in die Biegemaschine, oder aus der Biegemaschine in das erste Werkzeugmagazin 13 kann auch hier entweder in das zweite Werkzeugmagazin der Biegemaschine, oder direkt in die Werkzeugaufnahmen 34, 35 erfolgen.

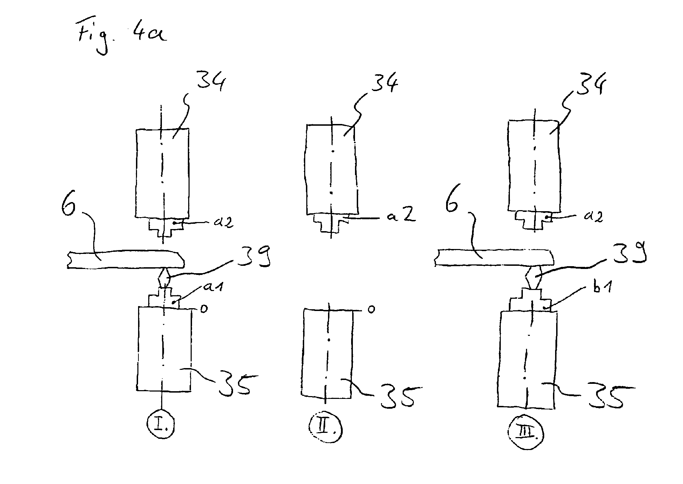

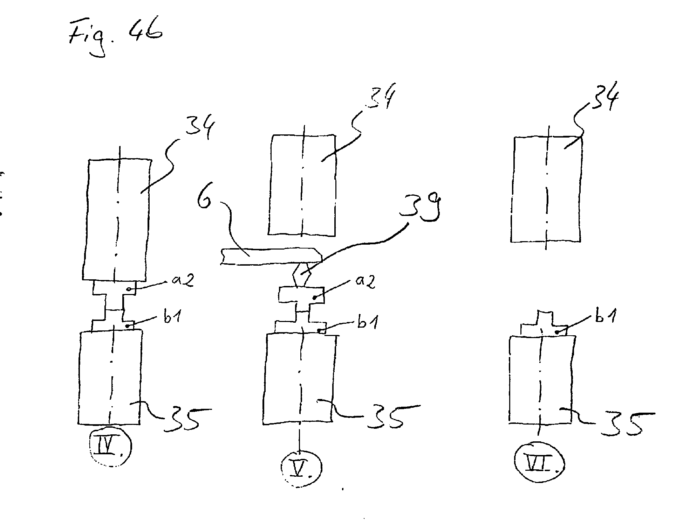

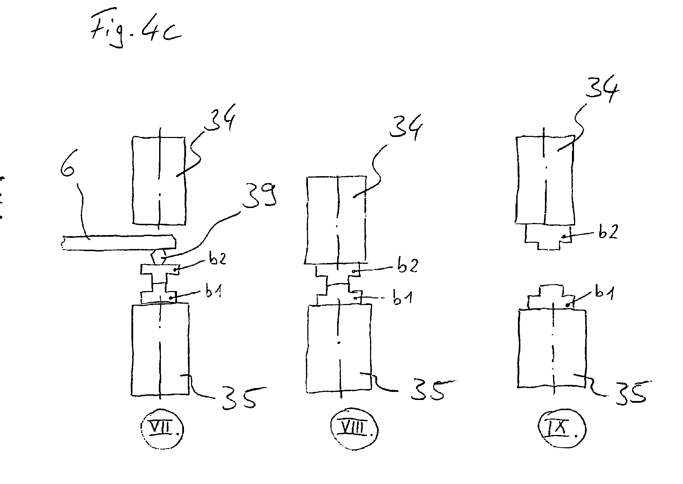

In Fig. 4a bis 4c sind jeweils die obere Werkzeugaufnahme 34 und die untere Werkzeugaufnahme 35 für Biegewerkzeuge 11, und die Blechaufnahmeeinheit 6 mit der vierten Werkzeugaufnahme 39 (Fig. 1b) gezeigt. Die Biegewerkzeuge 11 bestehen jeweils aus einem Werkzeugunterteil a1, b1 und einem Werkzeugoberteil a2, b2.

Das Auswechseln von den Biegewerkzeugen aus den und in die Werkzeugaufnahmen 34, 35 wird in einem Verfahren mit den folgenden Schritten beschrieben.

Vor einem ersten Schritt ist ein Biegewerkzeug mit dem Werkzeugunterteil a1 und dem Werkzeugoberteil a2 in den Werkzeugaufnahmen 34, 35 aufgenommen. In dem ersten Schritt fährt die Blechaufnahmeeinheit 6 mit der vierten Werkzeugaufnahme 39 über das Werkzeugunterteil a1, nimmt das Werkzeugunterteil a1 auf (siehe Ansicht I), wobei es von der unteren Werkzeugaufnahme 35 gelöst wird, und entfernt das Werkzeugunterteil a1 aus der unteren Werkzeugaufnahme 35 (Ansicht II).

In einem nächsten zweiten Schritt wird das Werkzeugunterteil b1 mittels der vierten Werkzeugaufnahme 39 in die untere Werkzeugaufnahme 35 eingebracht und dort befestigt (Ansicht III) .

In einem dritten Schritt wird die obere Werkzeugaufnahme 34 mit dem Werkzeugoberteil a2 nach unten gefahren, das Werkzeugoberteil a2 von der oberen Werkzeugaufnahme 34 gelöst, und dadurch auf dem Werkzeugunterteil b1 abgelegt (Ansicht IV).

In einem vierten Schritt fährt die Blechaufnahmeeinheit 6 mit der vierten Werkzeugaufnahme 39 über das auf dem Werkzeugunterteil b1 abgelegte Werkzeugoberteil a2 und nimmt das Werkzeugoberteil a2 auf (siehe Ansicht V).

Das Werkzeugoberteil a2 wird dann in einem fünften Schritt aus der Maschine entnommen (Ansicht VI). In einem sechsten Schritt wird das Werkzeugoberteil b2 durch die Blechaufnahmeeinheit 6 mit der vierten Werkzeugaufnahme 39 auf dem Werkzeugunterteil b1 abgelegt (Ansicht VII).

Die obere Werkzeugaufnahme 34 fährt nach unten, nimmt das Werkzeugoberteil b1 auf (Ansicht VIII) und fährt dann wieder nach oben (Ansicht IX), womit das Auswechseln des Biegewerkzeugs abgeschlossen ist.

Die Entnahme von Werkzeugen aus dem ersten Werkzeugmagazin oder das Ablegen in dem ersten Werkzeugmagazin kann hauptzeitparallel erfolgen. Dies bedeutet, dass während auf der Blechbearbeitungsmaschine ein Blech bearbeitet wird, mit der Blechbelade- und Blechentladeeinheit 1 ohne Beeinträchtigung dieses Bearbeitungsablaufs ein Werkzeug aus dem ersten Werkzeugmagazin entnommen werden oder in dem ersten Werkzeugmagazin abgelegt werden kann.

## Patentansprüche

1. Blechbelade- und Blechentladeeinheit (1) für eine Blechbearbeitungsmaschine (21), wobei die Blechbelade- und Blechentladeeinheit (1) eine stationäre Einheit (2) und eine Blechaufnahmeeinheit (6) mit mindestens einer Einrichtung zum Aufnehmen eines Blechs (39), mit zumindest einer Antriebsvorrichtung (7) zur Bewegung der Blechaufnahmeeinheit (6) in wenigstens einer horizontalen Achse aufweist, **dadurch gekennzeichnet, dass** die Blechaufnahmeeinheit (6) mindestens eine Werkzeugaufnahme (10, 39) zum Aufnehmen eines Blechbearbeitungswerkzeugs (11) aufweist.

2. Blechbelade- und Blechentladeeinheit (1) gemäß Anspruch 1, **dadurch gekennzeichnet, dass** die stationäre Einheit (2) ein erstes Werkzeugmagazin (13) mit mindestens einer zweiten Werkzeugaufnahme (14) aufweist.

3. Blechbelade- und Blechentladeeinheit (1) gemäß einem der vorangehenden Ansprüche, **dadurch gekennzeichnet, dass** die Blechaufnahmeeinheit (6) mindestens zwei Werkzeugaufnahmen (10, 39) aufweist.

4. Blechbelade- und Blechentladeeinheit (1) gemäß einem der Ansprüche 1 bis 3, **dadurch gekennzeichnet, dass** die ersten Werkzeugaufnahmen (10) relativ zu der Blechaufnahmeeinheit (6) beweglich positioniert sind.

5. Blechbelade- und Blechentladeeinheit (1) gemäß Anspruch 4, **dadurch gekennzeichnet, dass** die ersten Werkzeugaufnahmen (10) relativ zueinander fest positioniert sind.

6. Blechbelade- und Blechentladeeinheit (1) gemäß einem der Ansprüche 4 oder 5, **dadurch gekennzeichnet, dass** die ersten Werkzeugaufnahmen (10) relativ zu der Blechaufnahmeeinheit (6) drehbar sind.

7. Blechbearbeitungsmaschine mit einer Steuerungsvorrichtung, **dadurch gekennzeichnet, dass** sie eine Blechbelade- und Blechentladeeinheit (1) gemäß einem der Ansprüche 1 bis 6 aufweist.

8. Blechbearbeitungsmaschine gemäß Anspruch 7, **dadurch gekennzeichnet, dass** die Bearbeitungsmaschine als eine Stanzmaschine (21) mit einer oberen Werkzeugaufnahme (25), und einer unteren Werkzeugaufnahme (24) ausgeführt ist.

9. Blechbearbeitungsmaschine gemäß Anspruch 7, **dadurch gekennzeichnet, dass** die Bearbeitungsmaschine als eine Biegemaschine mit einer oberen Werkzeugaufnahme (34) und einer unteren Werkzeugaufnahme (35) ausgeführt ist.

10. Blechbearbeitungsmaschine gemäß einem der Ansprüche 7 bis 9, **dadurch gekennzeichnet, dass** eine Steuerungsvorrichtung dazu angepasst ist, dass die Steuerungsvorrichtung Signale ausgibt, dass mindestens eines der Werkzeuge (11) von dem ersten Werkzeugmagazin (13) in ein zweites Werkzeugmagazin (15) oder die Werkzeugaufnahme (24, 25) übergeben wird, und das Werkzeug (11) aus einem zweiten Werkzeugmagazin (15), oder der Werkzeugaufnahme (24, 25) übernommen wird.

11. Verfahren zum Ein- und Auswechseln von Werkzeugen (11), **dadurch gekennzeichnet, dass** in einem Schritt das Werkzeug (11) mit der Blechbelade - und Blechentladeeinheit gemäß einem der Ansprüche 1 bis 7 aus dem ersten Werkzeugmagazin (13) in ein zweites Werkzeugmagazin (15) übergeben und in einem weiteren Schritt mit der Blechbelade- und Blechentladeeinheit gemäß einem der Ansprüche 1 bis 7 aus dem zweiten Werkzeugmagazin (15) in das erste Werkzeugmagazin (13) übernommen wird.

12. Verfahren zum Ein- und Auswechseln von Werkzeugen (11), **dadurch gekennzeichnet, dass** in einem Schritt das Werkzeug (11) mit der Blechbelade- und Blechentladeeinheit gemäß einem der Ansprüche 1 bis 7 aus dem ersten Werkzeugmagazin (13) in die Werkzeugaufnahme (24, 25) übergeben wird, und mit der Blechbelade- und Blechentladeeinheit gemäß einem der Ansprüche 1 bis 7 in einem weiteren Schritt das Werkzeug (11) aus der Werkzeugaufnahme (24, 25) übernommen wird.

13. Verfahren gemäß einem der Ansprüche 11 oder 12, **dadurch gekennzeichnet, dass** zumindest einer der Schritte zur Übergabe des Werkzeugs (11) mit einem Beladen einer Blechtafel (26), oder einer der Schritte zur Übernahme des Werkzeugs (11) mit einem Entladen eines gefertigten Blechteils überlagert ist.

14. Verfahren gemäß einem der Ansprüche 11 bis 13, **dadurch gekennzeichnet, dass** das Werkzeug (11) aus dem ersten Werkzeugmagazin (13) entnommen wird oder in dem ersten Werkzeugmagazin (13) abgelegt wird, während auf der Blechbearbeitungsmaschine (21) das Blech (26) bearbeitet wird.

15. Verfahren gemäß einem der Ansprüche 12 bis 14, **dadurch gekennzeichnet, dass** das Werkzeug (11) ein Werkzeugunterteil (a1, b1) und ein Werkzeugoberteil (a2, b2) aufweist, und das Werkzeugoberteil (a2, b2) in einem Schritt durch die obere Werkzeugaufnahme (34) auf dem Werkzeugunterteil (a1, b1) abgelegt wird, in einem folgenden Schritt durch die Blechaufnahmeeinheit (6) aufgenommen wird.

16. Verfahren gemäß einem der Ansprüche 12 bis 15, **dadurch gekennzeichnet, dass** das Werkzeug 11 ein Werkzeugunterteil (a1, b1) und ein Werkzeugoberteil (a2, b2) aufweist, und das Werkzeugoberteil (a2, b2) in einem Schritt durch die Blechaufnahmeeinheit (6) auf dem Werkzeugunterteil (a1, b1) abgelegt wird, und in einem folgenden Schritt durch die obere Werkzeugaufnahme (34) aufgenommen wird.

## Claims

1. Loading and unloading unit for sheet metal (1) for a sheet metal processing machine (21), wherein the loading and unloading unit for sheet metal (1) comprises a non-moving unit (2) and a sheet metal picking unit (6) with at least one device for picking a sheet metal (39), with at least one driving device (7) for moving the sheet metal picking unit (6) in at least one horizontal axis, **characterized in that**
the sheet metal picking unit (6) comprises at least one tool holder (10, 39) for holding a sheet metal processing tool (11).

2. Loading and unloading unit (1) according to claim 1, **characterized in that** the non-moving unit (2) comprises a first tool magazine (13) with at least one second tool holder (14).

3. Loading and unloading unit (1) according to any of the preceding claims, **characterized in that** the sheet metal picking unit (6) comprises at least two tool holders (10, 39).

4. Loading and unloading unit (1) according to any of the claims 1 to 3, **characterized in that** the first tool holders (10) are movably positioned in relation to the sheet metal picking unit (6).

5. Loading and unloading unit (1) according to claim 4, **characterized in that** the first tool holders (10) are fixedly positioned in relation to another.

6. Loading and unloading unit (1) according to any of claims 4 or 5, **characterized in that** the first tool holders (10) are relatively rotatable to the sheet metal picking unit (6) .

7. Sheet metal processing machine with a controller, **characterized in that** the sheet metal processing machine comprises a loading and unloading unit for sheet metal (1) according to any of the claims 1 to 6.

8. Sheet metal processing machine according to claim 7, **characterized in that** the processing machine is accomplished as to be a punching machine (21) with an upper tool holder (25) and lower tool holder (24).

9. Sheet metal processing machine according to claim 7, **characterized in that** the processing machine is accomplished as to be a bending machine with an upper tool holder (34) and lower tool holder (35).

10. Sheet metal processing machine according to any of claims 7 to 9, **characterized in that** a controller is adapted thereto that the controller outputs signals, that at least one of the tools (11) is passed from the first tool magazine (13) in the second tool magazine (15) or the tool holder (24, 25), and that the tool (11) is taken over from a second tool magazine (15) or from the tool holder (24, 25).

11. Method for exchanging in and out of tools (11), **characterized in that** in one step, the tool (11) is passed from the first tool magazine (13) to the second tool magazine (15) by means of the loading and unloading unit for sheet metal according to any of the claims 1 to 7, and in a further step, the tool (11) is taken over from the second tool magazine (15) in the first tool magazine (13) by means of the loading and unloading unit for sheet metal according to any of the claims 1 to 7.

12. Method for exchanging in and out of tools (11), **characterized in that** in one step, the tool (11) is passed from the first tool magazine (13) to the tool holder (24, 25) by means of the loading and unloading unit for sheet metal according to any of claims 1 to 7, and in a further step, the tool (11) is taken over from the tool holder (24, 25) by means of the loading and unloading unit for sheet metal according to any of claims 1 to 7.

13. Method according to any of the claims 11 or 12, **characterized in that** at least one of the steps for passing the tool (11) is superimposed with a loading of a sheet metal plate (26), or one of the steps for taking over the tool (11) is superimposed with an unloading of a manufactured sheet metal part.

14. Method according to any of the claims 11 to 13, **characterized in that** the tool (11) is taken out of the first tool magazine (13) or it is deposited in the first tool magazine (13) during the sheet metal (26) is machined in the sheet metal processing machine (21).

15. Method according to any of the claims 12 to 14, **characterized in that** the tool (11) comprises a lower part of the tool (a1, b1) and an upper part of tool (a2, b2), and that the upper part of the tool (a2, b2) is deposited on the lower part of the tool (a1, b1) by means of the upper tool holder (34) in one step, and that it is held by means of the sheet metal picking unit (6) in a subsequent step.

16. Method according to any of the claims 12 to 15, **characterized in that** the tool (11) comprises a lower part of the tool (a1, b1) and an upper part of the tool (a2, b2), and that the upper part of the tool (a2, b2) is deposited on the lower part of the tool (a1, b1) by means of the sheet metal picking unit (6) in one step, and that it is held by the upper tool holder (34) in a subsequent step.

## Revendications

1. Unité de chargement et de déchargement de tôles (1), pour une machine de traitement de tôle (1), l'unité de chargement et de déchargement de tôles (1) présentant une unité stationnaire (2) et une unité de réception de tôle (6) avec au moins un dispositif pour recevoir une tôle (39), avec au moins un dispositif d'entraînement (7) pour le déplacement de l'unité de réception de tôle (6) en au moins un axe horizontal, **caractérisée en ce que** l'unité de réception de tôle (6) présente au moins une réception à outils (10, 39) pour recevoir un outil de traitement de tôle (11).

2. Unité de chargement et de déchargement de tôles (1) selon la revendication 1, **caractérisée en ce que** l'unité stationnaire (2) présente un premier magasin à outils (13) avec au moins une deuxième réception à outils (14).

3. Unité de chargement et de déchargement de tôles (1) selon l'une des revendications précédentes, **caractérisée en ce que** l'unité de réception de tôle (6) présente au moins deux réceptions à outils (10, 39).

4. Unité de chargement et de déchargement de tôles (1) selon l'une des revendications 1 à 3, **caractérisée en ce que** les premières réceptions à outils (10) sont positionnées de manière mobile par rapport à l'unité de réception de tôle (6).

5. Unité de chargement et de déchargement de tôles (1) selon la revendication 4, **caractérisée en ce que** les premières réceptions à outils (10) sont positionnées de manière fixe les unes par rapport aux autres.

6. Unité de chargement et de déchargement de tôles (1) selon l'une des revendications 4 ou 5, **caractérisée en ce que** les premières réceptions à outils (10) sont susceptibles de tourner par rapport à l'unité de réception de tôle (6).

7. Machine de traitement de tôle avec un dispositif de commande, **caractérisée en ce qu'**elle présente une unité de chargement et de déchargement de tôles (1) selon l'une des revendications 1 à 6.

8. Machine de traitement de tôle selon la revendication 7, **caractérisée en ce que** la machine de traitement est réalisée sous la forme d'une machine d'estampage (21), avec une réception à outils supérieure (25) et une réception à outils inférieure (35).

9. Machine de traitement de tôle selon la revendication 7, **caractérisée en ce que** la machine de traitement est réalisée sous la forme d'une cintreuse avec une réception à outils supérieure (34) et une réception à outils inférieure (35).

10. Machine de traitement de tôle selon l'une des revendications 7 à 9, **caractérisée en ce qu'**un dispositif de commande est adapté pour que le dispositif de commande délivre des signaux, **en ce qu'**au moins l'un des outils (11) est transféré du premier magasin à outils (13) dans un deuxième magasin à outils (15) ou la réception à outils (24, 25), et l'outil (11) est repris d'un deuxième magasin à outils (15), ou de la réception à outils (24, 25).

11. Procédé pour le changement, par introduction et évacuation, d'outils (11), **caractérisé en ce que**, en une étape, l'outil (11) est transféré avec l'unité de chargement et de déchargement de tôles selon l'une des revendications 1 à 7, du premier magasin à outils (13) dans un deuxième magasin à outils (15) et, en une autre étape, avec l'unité de chargement et de déchargement de tôles selon l'une des revendications 1 à 7, repris du deuxième magasin à outils (15) dans le premier magasin à outils (13).

12. Procédé pour le changement, par introduction et évacuation, d'outils (11), **caractérisé en ce que**, en une étape, l'outil (11) est transféré avec l'unité de chargement et de déchargement de tôles selon l'une des revendications 1 à 7, du premier magasin à outils (13) dans la réception à outils (24, 25) et, en une autre étape, avec l'unité de chargement et de déchargement de tôles selon l'une des revendications 1 à 7, l'outil (11) est repris de la réception à outils (24, 25).

13. Procédé selon l'une des revendications 11 ou 12, **caractérisé en ce qu'**au moins l'une des étapes pour le transfert de l'outil (11) est superposée à un chargement d'une feuille de tôle (26), ou l'une des étapes pour la reprise de l'outil (11) est superposée à un déchargement d'une pièce en tôle fabriquée.

14. Procédé selon l'une des revendications 11 à 13, **caractérisé en ce que** l'outil (11) est prélevé du premier magasin à outils (13), ou est déposé dans le premier magasin à outils (13), tandis que la tôle (26) est travaillée sur la machine de traitement de tôle (21).

15. Procédé selon l'une des revendications 12 à 14, **caractérisé en ce que** l'outil (11) présente une partie inférieure d'outil (a1, b1) et une partie supérieure d'outil (a2, b2), et la partie supérieure d'outil (a2, b2) est déposée sur la partie inférieure d'outil (a1, b1) en une étape, au moyen de la réception supérieure d'outil (34), et est reçue par l'unité de réception de tôle (6) en une étape subséquente.

16. Procédé selon l'une des revendications 12 à 15, **caractérisé en ce que** l'outil (11) présente une partie inférieure d'outil (a1., b1) et une partie supérieure d'outil (a2, b2), et la partie supérieure d'outil (a2, b2) est déposée sur la partie inférieure d'outil (a1, b1) en une étape, au moyen de l'unité de réception de tôle (6), et est reçue par la réception supérieure d'outil (34) en une étape subséquente.
